# EUROPEAN PATENT SPECIFICATION

(11) **EP 3 442 395 B1**
(45) Date of publication and mention of the grant of the patent: **14.08.2024**
(21) Application number: 17718766.3
(22) Date of filing: 11.04.2017
(51) Int. Cl.: A47L 15/00, A47L 15/24, A47L 15/42

(54) **CONVEYOR DISHWASHER FOR WASHING WASHWARE**
FÖRDERBANDGESCHIRRSPÜLMASCHINE ZUM SPÜLEN VON SPÜLGUT
LAVE-VAISSELLE À CONVOYEUR POUR LAVER DES ARTICLES DE LAVAGE

(30) Priority: 15.04.2016 DE 102016107054
(43) Date of publication of application: 20.02.2019
(73) Proprietor: Illinois Tool Works Inc., Glenview, IL 60025 (US)
(72) Inventor: PADTBERG, Klaus, 77654 Offenburg (DE); DISCH, Harald, 79215 Elzach (DE)
(74) Representative: Meissner Bolte Partnerschaft mbB
(86) International application number: PCT/US2017/026939
(87) International publication number: WO 2017/180580

(56) References cited:
- DE-A1- 102007 009 252
- DE-A1- 102014 208 813
- US-A1- 2007 023 069
- US-A1- 2008 035 175
- US-A1- 2011 017 234

## Description

The present invention relates to a conveyor dishwasher with at least one final rinse zone and at least one washing zone which - as seen in the conveying direction of the washware - is arranged upstream of the at least one final rinse zone, and also to a method for operating said conveyor dishwasher.

Accordingly, the invention relates, in particular, to a conveyor dishwasher for washing washware, wherein the conveyor dishwasher has at least one final rinse zone in which fresh water containing rinse aid which may have been added in a metered manner is sprayed onto the washware which is to be treated, and wherein the conveyor dishwasher further has at least one washing zone which - as seen in the conveying direction of the washware - is arranged upstream of the at least one final rinse zone, and in which washing liquid is sprayed onto the washware which is to be treated.

The conveyor dishwasher according to the invention is, in particular, a commercial conveyor dishwasher and can be in the form of a flight-type dishwasher (flight-type warewasher) or a rack-conveyor dishwasher (rack-conveyor warewasher).

Conveyor dishwashers (conveyor warewashers) are used in the commercial sector. In contrast to domestic dishwashers, in which the washware to be washed remains stationary in the dishwasher during washing, in conveyor dishwashers the washware is conveyed through various treatment zones of the machine.

Commercial dishwashers normally operate in two main process steps, specifically firstly washing using washing liquid and then final rinsing using heated fresh water to which rinse aid is generally added in a metered manner. To this end, in the case of conveyor dishwashers, the washware, for example tableware, pots, glasses, cutlery, trays and other utensils which are to be cleaned, is conveyed through a plurality of treatment zones, for example pre-washing zone(s), main-washing zone(s), post-washing or pre-rinse zone(s), final rinse zone(s) and drying zone(s). Spray nozzles by means of which liquid is sprayed onto the washware which is conveyed through the respective treatment zones by a conveyor apparatus are associated with said washing and rinse zones. A tank in which sprayed liquid is collected and/or in which liquid is provided for the spray nozzles of the washing zone in question is generally associated with each washing zone (pre-washing zone, main-washing zone, post-washing zone).

A conveyor dishwasher of this type is known, for example, from DE 196 44 438 A1. This conveyor dishwasher contains, one after the other in the washware conveying direction, a pre-clearing zone (pre-cleaning zone) with pre-clearing nozzles (pre-cleaning nozzles) for removing heavy soiling from the washware, at least one washing zone (wash zone) with washing nozzles (wash nozzles) for spraying washing liquid (wash liquid) onto the washware, a pre-rinse zone with pre-rinse nozzles, and a final rinse zone with final rinse nozzles. The final rinse nozzles spray final rinse liquid, in particular fresh water, onto the washware. The sprayed final rinse liquid passes into a pre-rinse tank, from which it is conveyed by means of a pump line to the pre-rinse nozzles. The pre-rinse liquid sprayed by the pre-rinse nozzles flows back into the pre-rinse tank. A portion of the pre-rinse liquid which is sprayed by the pre-rinse nozzles is directed by a baffle plate into the washing tank of the last washing zone. By virtue of a liquid cascade system, liquid can flow, counter to the washware conveying direction, from the pre-rinse tank into the final washing tank and, from the latter, further as far as a tank which intercepts the liquid which is sprayed by the pre-clearing nozzles (pre-cleaning nozzles) in the pre-clearing zone (pre-cleaning zone).

The document US 2008/035175 A1 relates to a dishwasher operating method and to a conveyor-type dishwasher with at least one wash zone and a final-rinse zone. The conveyor-type dishwasher is provided with a feature to assist in low energy and/or water consumption, including one or more of (i) executing final-rinse of items with a consumption of final-rinse liquid that is 3.5 I/min or less; (ii) executing final-rinse of items with a consumption of final-rinse liquid of 3 l/m² movement of the horizontal take-up plane of a dish carrier or less; (iii) executing final-rinse of items with one or more side-originating final-rinse liquid spray jets in combination with top-originating final-rinse liquid spray jets and bottom-originating final-rinse liquid spray jets.

The document DE 10 2007 009 252 A1 relates to a continuous-flow dishwashing machine for cleaning items to be cleaned. The dishwashing machine has a feed device for transportation of items to be cleaned in the feed direction through successive treatment zones in the continuous-flow dishwashing machine.

The fresh water consumption by conveyor dishwashers is, in particular, dependent on how much fresh water is required for initially filling the conveyor dishwasher and the amount of fresh water consumed for final rinsing during operation of the conveyor dishwasher. The final rinse liquid used for final rinsing has to be of the quality of drinking water in microbiological terms. Therefore, all or at least some of the water for final rinsing in a conveyor dishwasher is normally taken from the public fresh water supply system. Furthermore, it is important for consumption of detergent and rinse aid to be as low as possible for the purpose of cost-effective and environmentally-friendly operation of a conveyor dishwasher.

Detergent is added to the fresh water in the washing zones of the conveyor dishwasher. The detergent renders the washing liquid alkaline. The alkalinity and food residues have to be completely removed from the washware in the pre-rinse zones and at the latest in the final rinse zone, so that no visible residues remain on the washware. The residues represent a visible problem, particularly when cleaning glasses.

Accordingly, the main object of final rinsing with final rinse liquid is to remove the liquor from the washware. To this end, final rinse liquid in the form of fresh water, which may be pure or have further additives, for example rinse aid, added, is sprayed by means of final rinse spray nozzles onto the washware which is conveyed through the final rinse zone. The final rinse liquid which is sprayed in the final rinse zone is usually conveyed counter to the conveying direction of the washware from treatment zone to treatment zone of the conveyor dishwasher by means of a cascade system. Accordingly, the final rinse liquid which flows via the cascade system into the washing tank during final rinsing serves, in particular, to regenerate the washing liquid in the washing tank.

Accordingly, the final rinse liquid which is supplied for final rinsing purposes runs through the entire machine in accordance with the cascade principle in conventional conveyor dishwashers. In the process, the washing liquid is regenerated in the respective washing tanks and therefore kept "fresh", that is to say the concentration of contaminants is kept low owing to the continuous dilution. A further effect of this continuous supply of liquid into the washing tanks is that precisely as much liquid is displaced from the washing tanks, that is to say ultimately passes to the drain, as is supplied to the washing tanks. Owing to the continuous supply of liquid, it is also necessary for detergent to be continuously added in a metered manner to the respective washing tanks or to the washing liquid in order to maintain the desired concentration of detergent in the washing liquid and, respectively, in the washing tanks.

In particular, rack-conveyor dishwashers are almost without exception provided with a feed table and a delivery table. In many cases, the feed table is in the form of a pre-cleaning station and is used for pre-cleaning the washware by generally manually rinsing-off and/or by manually removing soiling from the washware, specifically before the washware is conveyed through the respective treatment zones of the conveyor dishwasher with the aid of a conveyor apparatus (conveyor). Pre-cleaning by pre-rinsing is normally performed manually. Pre-rinsing in the course of pre-cleaning is generally carried out using on-site cold or preheated fresh water. In some cases, additional cleaning chemicals are also used for pre-rinsing purposes. The delivery table is used for drying and unloading, for example, the dish racks if these are used for conveying the washware through the respective treatment zones of the conveyor dishwasher.

It is known that approximately 2 to 3 liters of fresh water are generally used for each rack conveyor for pre-cleaning washware, depending on the type of washware and the degree of soiling of said washware, wherein this fresh water may be pure or have further additives such as, for example, detergent added. Accordingly, pre-cleaning the washware also makes a considerable contribution to the total water consumption.

The aim of the invention is to solve the object of providing, in a simple and cost-effective manner, a conveyor dishwasher which exhibits a low level of water consumption and a low level of detergent consumption, in particular without the cleaning result of the conveyor dishwasher being adversely affected. A further aim is to specify a corresponding operating method for a conveyor dishwasher of this kind.

According to the invention, the object relating to the conveyor dishwasher is achieved by the features of independent patent claim 1. The method according to the invention for operating a conveyor dishwasher is indicated in coordinate patent claim 11.

Further features of the invention can be found in the respective dependent claims. Accordingly, it is provided, in particular, that the conveyor dishwasher according to the invention has a liquid transfer system which is designed, for the purpose of regenerating the washing liquid which is to be sprayed in the at least one washing zone of the conveyor dishwasher, to preferably as required supply an in particular definable portion of the liquid which was previously sprayed in the at least one final rinse zone directly to the at least one washing zone.

In addition to this, it is provided that, for the purpose of regenerating the washing liquid which is to be sprayed in the at least one washing zone, an in particular definable quantity of fresh water which has not previously been sprayed in the at least one final rinse zone is preferably supplied as required to the at least one washing zone.

Since, according to the invention, the washing liquid which is to be sprayed in the at least one washing zone of the conveyor dishwasher is only still regenerated with fresh water or with final rinse liquid which has previously been sprayed in the at least one final rinse zone as required, it is accordingly necessary for less detergent to be added in a metered manner to the smaller quantity of supplied fresh water or quantity of final rinse liquid in the at least one washing zone.

According to the invention, it is provided that the liquid transfer system has a liquid bypass system which is designed to route at least a portion and in particular a definable portion of the liquid which was previously sprayed in the at least one final rinse zone past the at least one washing zone.

In this connection, it is feasible, for example, that the liquid bypass system is designed to preferably selectively supply the liquid which is routed past the at least one washing zone to a pre-washing zone of the conveyor dishwasher and/or to a pre-cleaning station which is associated with the conveyor dishwasher, in particular a manual pre-cleaning station.

With this development, it is possible to save at least a large portion of the fresh water which is usually used for pre-cleaning washware, this reducing further consumption of resources, in particular fresh water and energy. Since the liquid which is routed past the at least one washing zone by means of the liquid bypass system is generally heated liquid (heated final rinse liquid), it is also possible - if said liquid is supplied to the pre-cleaning station which is associated with the conveyor dishwasher - to optimize the efficiency of the washware pre-cleaning operation, specifically without additional resources (energy) being required for this purpose.

However, in addition, it is also feasible for at least a portion of the liquid which is routed past the at least one washing zone by means of the liquid bypass system to be supplied to a heat exchanger system of the conveyor dishwasher in order to recover at least a portion of the thermal energy which is contained in the liquid which is routed past the at least one washing zone.

According to the invention, it is provided that the conveyor dishwasher has a sensor device with which at least one parameter which characterizes the quality of the liquid which is to be sprayed in the at least one washing zone of the conveyor dishwasher can be detected. In addition to this, the sensor device is preferably designed to detect at least one parameter which characterizes the quality of the liquid which is sprayed in the at least one final rinse zone of the conveyor dishwasher.

These parameters which can be detected by means of the sensor device of the conveyor dishwasher are, for example, the degree of soiling, the turbidity, the electrical conductivity and/or the alkalinity of the examined liquid (the liquid which is to be sprayed in the washing zone or the liquid which is to be sprayed in the at least one final rinse zone).

The liquid transfer system of the conveyor dishwasher according to the invention is designed to supply liquid to the at least one washing zone directly from the at least one final rinse zone, depending on the at least one detected parameter. Thus, the liquid transfer only occurs when needed, and there is no continuous cascade system as in prior machines.

The invention will be described below with reference to the appended drawings with reference to exemplary embodiments.

In the drawings:
Figure 1 schematically shows a commercial conveyor dishwasher according to a first exemplary embodiment of the invention; and
Figure 2 schematically shows a commercial conveyor dishwasher according to a further exemplary embodiment of the invention.

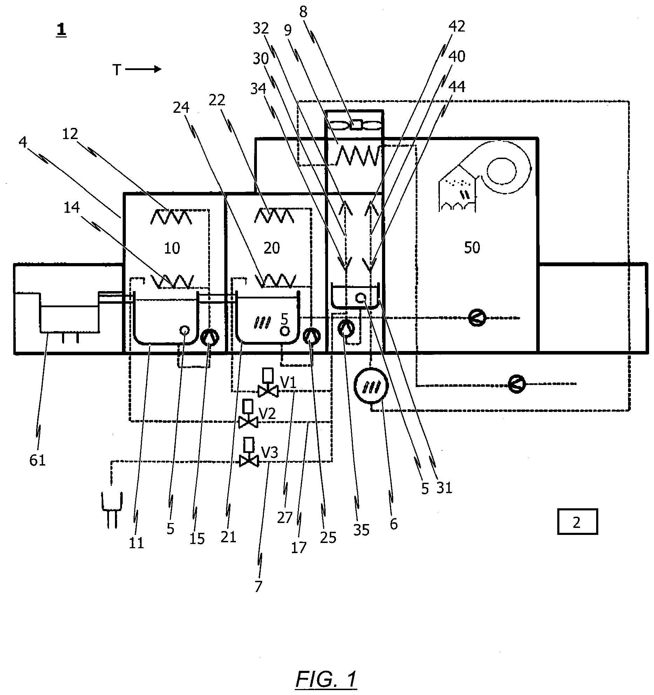

Figure 1 schematically shows a conveyor dishwasher 1 according to a first exemplary embodiment of the invention, wherein the conveyor dishwasher 1 has a conveyor apparatus, not explicitly illustrated in the drawings, for conveying washware, likewise not illustrated in the drawings, in a conveying direction T through the conveyor dishwasher 1.

The conveyor dishwasher 1 further has a control device 2 for controlling the respective treatment programs in the individual treatment zones of the machine 1 and for setting the process parameters which are associated with the treatment programs.

The conveyor apparatus is, in particular, dish racks which are populated with the washware, not illustrated in the drawings, and which are placed on a conveyor apparatus. The conveyor apparatus can be continuously driven by a preferably electric drive, so that the dish racks which are placed on the conveyor apparatus are transported through the various treatment zones of the conveyor dishwasher 1 with the washware inserted therein.

If the conveyor dishwasher 1 is in the form of a rack-conveyor dishwasher, the dish racks with the washware, for example tableware, cutlery, pots, pans and/or trays, inserted therein are usually manually placed on the conveyor apparatus in the region of an inlet 4. In accordance with the conveying direction T indicated by the arrow in the drawings, the dish racks containing the washware are then conveyed from the inlet 4 into an inlet tunnel.

However, it goes without saying that the present invention is not restricted to conveyor dishwashers 1 which are designed as rack-conveyor dishwashers. In particular, the invention also relates to, for example, flight-type dishwashers or other conveyor dishwashers 1 in which - in contrast to so-called batch dishwashers - the washware which is to be treated is conveyed through the individual treatment zones of the conveyor dishwasher 1 with the aid of a conveyor apparatus.

The conveyor dishwasher 1 according to the embodiment illustrated in figure 1 for example has at least one washing zone, for example as illustrated in figure 1 a pre-washing zone 10 and a main-washing zone 20. The main-washing zone 20 is arranged downstream of the pre-washing zone 10 as seen in the conveying direction T.

In the conveyor dishwasher 1 schematically illustrated in figure 1, at least one final rinse zone 30, 40 is arranged downstream of the at least one washing zone (here: pre-washing zone 10 and main-washing zone 20) as seen in the conveying direction T. Specifically, the conveyor dishwasher 1 according to the embodiment illustrated in figure 1 has a pump final rinse zone 30 and a fresh water final rinse zone 40 as final rinse zones. In the fresh water final rinse zone 40, fresh water containing rinse aid which may have been added in a metered manner which fresh water was not previously sprayed in one of the treatment zones of the conveyor dishwasher 1 is sprayed onto the washware which is to be treated.

As indicated, a final rinse liquid tank 31 is associated with the fresh water final rinse zone 40, at least a portion of the fresh water which is sprayed in the fresh water final rinse zone 40 being collected in said final rinse liquid tank.

In the exemplary embodiment of the conveyor dishwasher 1 according to the invention schematically illustrated in figure 1, the pump final rinse zone 30 is arranged between the fresh water final rinse zone 40 and the main-washing zone 20. In the pump final rinse zone 30, at least a portion of the liquid which has collected in the final rinse liquid tank 31 is (preferably as required or continuously) sprayed, preferably in a recirculating manner, onto the washware which is to be treated.

Although not illustrated in figure 1, it is feasible in this connection for a tank to be associated with the pump final rinse zone 30, which tank is designed separately from the final rinse liquid tank 31 and in which tank at least a portion of the liquid which is sprayed in the pump final rinse zone 30 is collected.

In the conveyor dishwasher 1 schematically illustrated in figure 1, a drying zone 50 adjoins the fresh water final rinse zone 40 as seen in the conveying direction T of the washware.

The respective treatment zones of the conveyor dishwasher 1 can be separated from one another by means of separating curtains. In particular, it is also feasible in this connection for the inlet tunnel of the conveyor dishwasher 1 itself to be also separated from the inlet 4 by means of a separating curtain. The provision of the separating curtains prevents washing liquid and final rinse liquid spraying between zones and prevents vapors undesirably escaping from the inlet tunnel and/or outlet tunnel of the conveyor dishwasher 1.

The said washing and rinse zones of the conveyor dishwasher 1 have associated spray nozzles. These spray nozzles serve to spray liquid onto the washware which is to be treated as the said washware is conveyed through the respective treatment zones by the conveyor apparatus. The individual spray systems of the treatment zones ensure that the washware which is to be treated is hosed down both from the top and from the bottom.

It is also feasible in this connection for the at least one final rinse zone 30, 40 of the conveyor dishwasher according to the invention to have not only downwardly directed upper final rinse nozzles 32, 42 and upwardly directed lower final rinse nozzles 34, 44, but also transversely directed lateral final rinse nozzles on either side of the conveyor apparatus. The use of lateral final rinse nozzles permits areas of the washware (areas of the tableware) to be sprayed with final rinse liquid in a targeted manner in shadow zones too. The use of lateral final rinse nozzles in the at least one final rinse zone 30, 40 has a significant advantage in terms of the final rinse result (effective rinsing-off of detergent residues from surfaces of the tableware in shadow zones too) compared to systems in which only upper and lower final rinse nozzles and no transversely directed lateral final rinse nozzles are provided in the at least one final rinse zone 30, 40, specifically when the conveying system is fully loaded, that is to say with plate-to-plate loading of the dish rack.

As already indicated, a tank (final rinse liquid tank 31) is associated with the at least one pump final rinse zone 30, used in figure 1, for collecting liquid which was sprayed in the pump final rinse zone 30 and/or in the upstream fresh water final rinse zone 40. The treatment zone of the conveyor dishwasher 1 which is called pump final rinse zone 30 in this document is occasionally also called the "pre-rinse" zone.

In the same way, a respective tank (main-washing tank 21 and pre-washing tank 11) is associated with the main-washing zone 20 and the pre-washing zone 10 for collecting liquid which is sprayed in the corresponding treatment zone 10, 20 and/or for providing liquid for the spray nozzles of the treatment zones 10, 20 in question.

As already indicated, in the conveyor dishwasher 1 illustrated in figure 1, final rinse liquid which is made up of fresh water to which rinse aid may have been added in a metered manner is sprayed onto the washware, not illustrated, by means of the final rinse nozzles 32, 34, 42, 44 which are arranged above and below the conveyor apparatus and preferably also laterally. The final rinse liquid which is sprayed in the fresh water final rinse zone 40 is collected in the final rinse liquid tank 31 which, here, is jointly associated with the fresh water final rinse zone and the pump final rinse zone 30.

A portion of the final rinse liquid which has collected in the final rinse liquid tank 31 is supplied to the spray nozzles 32, 34 of the pump final rinse zone 30 by means of a final rinse pump 35 as required. The final rinse liquid which is sprayed by means of the spray nozzles 32, 34 of the pump final rinse zone 30 flows back into the common final rinse liquid tank 31, which is associated with the pump final rinse zone 30 and the fresh water final rinse zone 40, due to gravity.

However, in contrast to the conventional conveyor dishwashers known from the prior art, at least a portion of the final rinse liquid which is sprayed in the final rinse zone 30, 40 is not automatically supplied to the main-washing zone 20 which adjoins the pump final rinse zone 30 and from there to the pre-washing zone 10 which adjoins the main-washing zone 20, counter to the conveying direction T of the washware, by means of a cascade system in the solution according to the invention. Instead, a liquid transfer system which is designed to regenerate the washing liquid which is to be sprayed in the respective washing zones (pre-washing zone 10, main-washing zone 20) in a targeted and selective manner is used in the conveyor dishwasher 1 schematically illustrated, in particular, in figure 1.

To this end, it is provided in the conveyor dishwasher 1 schematically illustrated in figure 1 that the liquid transfer system is designed, for the purpose of regenerating the washing liquid which is to be sprayed in the main-washing zone 20 in a targeted and selective manner, to supply as required an in particular definable portion of the liquid (final rinse liquid) which was previously sprayed in the at least one final rinse zone 30, 40 to the main-washing zone 20 in a direct and targeted manner.

The liquid transfer system is further designed, for the purpose of regenerating the washing liquid which is to be sprayed in the pre-washing zone 10 in a targeted and selective manner, to preferably as required supply an in particular definable portion of the liquid (final rinse liquid) which was previously sprayed only in the at least one final rinse zone 30, 40 to the pre-washing zone 10 in a direct and targeted manner.

The liquid transfer system according to the embodiment of the conveyor dishwasher 1 according to the invention schematically illustrated in figure 1 has a line system which is flow-connected to the delivery end of the final rinse pump 35. The line system has a line 27 which is associated with the main-washing zone 20 and which opens out in the main-washing tank 21 which is associated with the main-washing zone 20, and has a line which is associated with the pre-washing zone 10 and which opens out in the tank 11 which is associated with the pre-washing zone 10.

Firstly that line 27 of the liquid transfer system which is associated with the main-washing zone 20 and secondly that line 17 of the liquid transfer system which is associated with the pre-washing zone 10 can be flow-connected to the delivery end of the final rinse pump 35 by means of correspondingly actuable valves V1, V2.

In this way, an in particular definable portion of the liquid which was previously sprayed in the at least one final rinse zone 30, 40 can be supplied as required to the tank 11, 21, which is associated with the corresponding washing zone (pre-washing zone 10, main-washing zone 20), in a targeted manner.

Although not illustrated in figure 1, it is in particular feasible for a 3-way valve to be provided at the delivery end of the final rinse pump 35 in order to selectively flow-connect the delivery end of the final rinse pump 35 to the line system of the liquid transfer system and/or to the spray nozzles 32, 34 which are associated with the pump final rinse zone 30.

Furthermore, the term "final rinse pump" used in this document is not intended to be interpreted as restrictive. It goes without saying that a pump which is not associated with the at least one final rinse zone 30, 40 can also be used instead of the final rinse pump 35 shown in figure 1 in order to supply the liquid which is sprayed in the at least one final rinse zone 30, 40 as required in a targeted manner at least to one of the tanks 11, 21 which are associated with the washing zones 10, 20.

The liquid transfer system, which is used in the embodiment of the conveyor dishwasher 1 according to the invention schematically illustrated in figure 1, further has a waste water transfer line 7 which can be flow-connected to the delivery end of the final rinse pump 35 and/or to the final rinse liquid tank 31 which is associated with the at least one final rinse zone 30, 40 as required by means of a valve V3 in order to supply the liquid (final rinse liquid) sprayed in the at least one final rinse zone 30, 40 as required directly to a waste water system.

Although not illustrated in figure 1, it is further feasible for the conveyor dishwasher 1 schematically indicated there to be provided with an in particular manual pre-cleaning station in which the washware which is to be treated in the treatment zones of the conveyor dishwasher 1 is manually pre-cleaned before the washware is transported through the individual treatment zones with the aid of the conveyor apparatus of the conveyor dishwasher 1.

According to a development of the solution according to the invention, a transfer line can be associated with this pre-cleaning station which is not explicitly illustrated in figure 1 and is preferably of manual design, by means of which transfer line the final rinse liquid which is sprayed in the at least one final rinse zone 30, 40 can be directly supplied as required to the manual pre-cleaning station.

As in the case of the waste water transfer line 7, a corresponding actuable valve can be associated with the transfer line which is associated with the optionally provided, in particular manual, pre-clearing station in order to as required flow-connect the transfer line to the delivery end of the final rinse pump 35 and/or to the common final rinse liquid tank 31 which is associated with the at least one final rinse zone 30, 40.

The liquid which was collected by the tank (main-washing tank 21) which is associated with the main-washing zone 20 is usually provided with a detergent and is sprayed onto the washware with the aid of a washing pump (main-washing pump 25) by means of the spray nozzles of the main-washing zone 20 (upper and lower main-washing nozzles 22, 24). The washing liquid which is sprayed using the main-washing nozzles 22, 24 then flows back into the main-washing tank 21 due to gravity.

The main-washing tank 21 itself is fluidically connected by means of an overflow line to the pre-washing tank 11 which is associated with the pre-washing zone 10. The washing liquid which is sprayed in the main-washing zone 20 enters the pre-washing tank 11 of the pre-washing zone 10 by means of said overflow line when a sufficient quantity of washing liquid has collected in the main-washing tank 21 of the main-washing zone 20.

The liquid which was collected by the pre-washing tank 11 of the pre-washing zone 10 is sprayed onto the washware by means of the spray nozzles of the pre-washing zone 10 (upper and lower pre-washing nozzles 12, 14) with the aid of a further washing pump (pre-washing pump 15). The washing liquid which is sprayed using the pre-washing nozzles 12, 14 then flows back into the pre-washing tank 11 of the pre-washing zone 10 due to gravity.

The pre-washing tank 11 of the pre-washing zone 10 is fluidically connected by means of an overflow line to a pre-cleaning tank 61 which is associated with a (preferably manual) pre-cleaning station or pre-cleaning zone. The washing liquid which is sprayed in the pre-washing zone 10 enters the pre-cleaning tank 61 by means of said overflow line when a sufficient quantity of washing liquid has collected in the pre-washing tank 11 of the pre-washing zone 10.

The liquid which has collected in the pre-cleaning tank 61 of the pre-cleaning station or pre-cleaning zone can be sprayed onto the washware by means of spray nozzles with the aid of a pre-cleaning pump in order to remove coarse contaminants from the washware, in particular before the washware is supplied to the pre-washing zone 10 of the conveyor dishwasher 1.

The pre-cleaning tank 61 is fluidically connected to a waste water network in order to supply the excess quantity of liquid to the waste water network when a specific liquid level is exceeded in the pre-cleaning tank 61.

As seen in the conveying direction T of the washware, a drying zone 15 adjoins the at least one final rinse zone 30, 40 - as indicated in figure 1. In the drying zone 15, the washware is dried using dry and heated air in order to blow off or dry off the moisture which is located on the washware. In order to keep the moisture content of the air in a range which is suitable for drying, it is feasible, for example, to supply atmospheric air from the outside to the drying zone 50 by means of an opening, for example through the outlet opening for the washware.

If, before the conveyor dishwasher 1 is first started, the tanks (pre-washing tank 11, main-washing tank 21, final rinse liquid tank 31) which are associated with the treatment zones are empty or only insufficiently filled, said tanks first have to be filled by means of a fresh water line and/or by spraying final rinse liquid in the at least one final rinse zone 30, 40. The fresh water line can be connected to a fresh water supply network by means of an actuable valve.

The quantity of washing liquid which is available in the main-washing zone 20 and in the pre-washing zone 10 can in each case be monitored with the aid of a level sensor which is provided in the main-washing tank 21 of the main-washing zone 20 and, respectively, with the aid of a level sensor which is provided in the pre-washing tank 11 of the pre-washing zone 10, and reported to the control device 2.

A fresh water container can be associated with the at least one final rinse zone 30, 40 for the purpose of buffer-storing at least a portion of the fresh water which is provided for the fresh water final rinsing.

An exhaust-air installation is provided in the embodiment illustrated in figure 1 in order to be able to discharge from the conveyor dishwasher 1 in a targeted manner the vapors which occur due to the physical effects of heating and spraying water during operation of the conveyor dishwasher 1. This exhaust-air installation is connected to at least one of the treatment zones - to the final rinse zones 30, 40 in the embodiment illustrated in figure 1 - by means of an air inlet in order to be able to discharge waste air, in particular warm, moist air and vapors, from the interior of the conveyor dishwasher 1 with the aid of a fan 8 which forms part of the exhaust-air installation.

In addition to the fan 8, the exhaust-air installation has a condenser device 9. In the embodiment illustrated in figure 1, this condenser device 9 comprises a heat exchanger. The heat exchanger is arranged in the exhaust-air installation in such a way that at least a portion of the exhaust air which is discharged by means of the air inlet with the aid of the fan is routed through the heat exchanger. In this way, moisture can be drawn from the exhaust air by condensation. The dried and cooled exhaust air is then output to the atmosphere of the room in which the conveyor dishwasher 1 is installed by means of the air outlet of the exhaust-air installation.

In order to be able to effectively prevent undesired condensation of steam, in particular on cool boundary surfaces in the installation room, it is provided in the embodiment of the conveyor dishwasher 1 according to the invention illustrated in figure 1 that the power of the condenser device 9, that is to say the quantity of moisture drawn from the exhaust air which is discharged from the conveyor dishwasher 1 per unit time, can be regulated in such a way that the temperature and therefore the absolute moisture content of the exhaust air at the air outlet of the exhaust-air installation can be set to a previously definable or defined value.

In the embodiment illustrated in figure 1, a heat exchanger which is cooled using fresh water as coolant is used in the condenser device 9. In order to recover at least a portion of the thermal energy which is contained in the exhaust air, the coolant output of the heat exchanger is connected to the final rinse nozzles 42, 44 of the fresh water final rinse zone 40 by means of a coolant discharge line in the embodiment of the solution according to the invention illustrated in figure 1.

Specifically, it is provided in the embodiment illustrated in figure 1 that the coolant discharge line, together with the main line system, is connected to a water heater 6 (boiler). In this way, it is possible to use at least a portion of the thermal energy of the exhaust air which is discharged from the interior of the conveyor dishwasher 1 to heat the final rinse liquid which is to be sprayed by means of the spray nozzles in the final rinse zone 30, 40.

As already indicated, the liquid which is sprayed in the main-washing zone 20 and in the pre-washing zone 10 preferably contains detergent which is added in a metered manner, for example, to the liquid which has collected in the main-washing tank 21 of the main-washing zone 20, with the aid of a detergent metering apparatus (not shown in the drawings).

The at least one detergent metering apparatus which is associated with the main-washing zone 20 and/or pre-washing zone 10 can be correspondingly actuated, in particular, by means of the control device 2 of the machine in the conveyor dishwasher 1 schematically illustrated in figure 1. In this connection, it is feasible, in particular, for the detergent metering apparatus to be actuated by the control device 2 depending on the quantity of liquid which was previously sprayed in the at least one final rinse zone 30, 40, which quantity is supplied to the main-washing tank 21 of the main-washing zone 20 and/or to the pre-washing tank 11 of the pre-washing zone 10 by means of the liquid transfer system, in order to then meter detergent as required into the liquid which is to be sprayed in the at least one washing zone 10, 20.

As is schematically indicated in figure 1, the exemplary embodiment of the conveyor dishwasher 1 shown there is provided with a sensor device by means of which the quality of liquid which is to be sprayed in at least one of the treatment zones of the conveyor dishwasher 1 can be monitored. By way of example, it is feasible - as indicated in figure 1 - that a corresponding sensor 5 is associated with each tank 11, 21, 31 of the conveyor dishwasher 1 in order to detect corresponding parameters of the liquid which has collected in this tank 11, 21, 31. The parameters which are detected by the sensors 5 are suitable for allowing conclusions to be drawn about the quality of the liquid which is contained in the corresponding tank 11, 21, 31. In this connection, it would be feasible, for example, for the sensor device to have at least one turbidity sensor, at least one optical, inductive, capacitive and/or electromagnetic sensor.

The values/parameters which are detected by the sensor device and relate to the quality of the liquid which is to be sprayed in the individual treatment zones 10, 20, 30 of the conveyor dishwasher 1 are supplied to the control device 2 of the machine for further evaluation. During evaluation of the parameters which are detected by the sensor device, at least one of the following processes is initiated by the control device 2 preferably automatically and with greater preference selectively automatically or it is at least acoustically and/or optically proposed to the operator of the conveyor dishwasher 1 to carry out these processes:
- regenerating the liquid which has collected in the main-washing tank 21 of the main-washing zone 20 using at least a portion of the liquid which was previously sprayed in the at least one final rinse zone 30, 40; and/or
- regenerating the liquid which has collected in the main-washing tank 21 of the main-washing zone 20 using fresh water which was not already previously sprayed in the at least one final rinse zone 30, 40; and/or
- metering a quantity of detergent which is to be metered into the liquid which has collected in the main-washing tank 21 of the main-washing zone 20 and, in particular, a quantity of detergent which is to be metered into the liquid which has collected in the main-washing tank 21 of the main-washing zone 20 per unit time into the liquid which has collected in the main-washing tank 21 of the main-washing zone 20, and/or
- regenerating the liquid which has collected in pre-washing tank 11 of the pre-washing zone 10 using at least a portion of the liquid which was previously sprayed in the at least one final rinse zone 30, 40; and/or
- regenerating the liquid which has collected in the pre-washing tank 11 of the pre-washing zone 10 using fresh water which was not already previously sprayed in the at least one final rinse zone 30, 40; and/or
- metering a quantity of detergent which is to be metered into the liquid which has collected in the pre-washing tank 11 of the pre-washing zone 10 and, in particular, a quantity of detergent which is to be metered into the liquid which has collected in the pre-washing tank 11 of the pre-washing zone 10 per unit time into the liquid which has collected in the pre-washing tank 11 of the pre-washing zone 10.

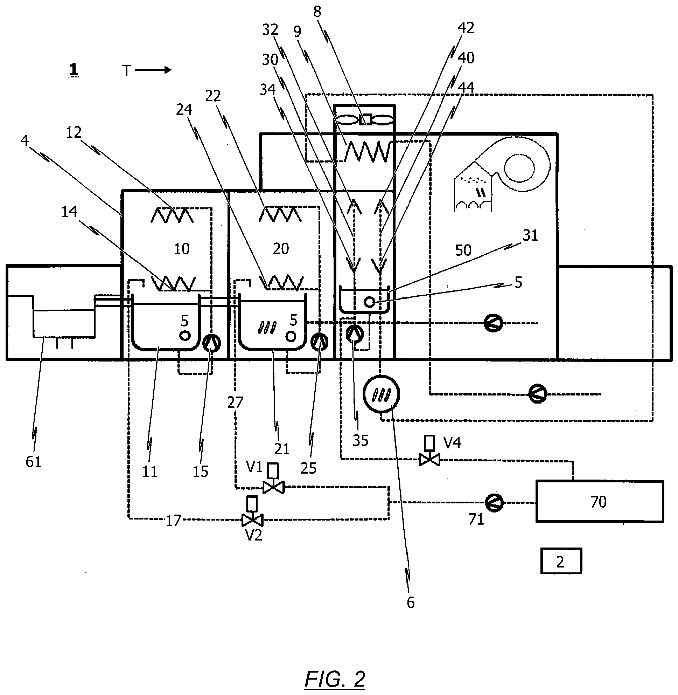

A further exemplary embodiment of the solution according to the invention will be described in greater detail below with reference to the schematic illustration in figure 2.

The conveyor dishwasher 1 schematically illustrated in figure 2 structurally and functionally corresponds substantially to the embodiment which was previously described with reference to the illustration in figure 1, but with the conveyor dishwasher 1 illustrated in figure 2 not being provided with a system with which an in particular definable portion of the liquid which was previously sprayed in the at least one final rinse zone 30, 40 is directly supplied preferably as required for the purpose of regenerating the washing liquid which is to be sprayed in the main-washing zone 20 and/or in the pre-washing zone 10.

Instead, a buffer storage tank 70 is provided in the liquid transfer system in the embodiment according to figure 2, which buffer storage tank can be flow-connected to the delivery end of the final rinse pumps 35 by means of a transfer line and an actuating valve V4 at one end and which is connected to the intake side of a transfer pump 71 at the other end. The liquid which is buffer-stored in the buffer storage tank 70 can be supplied as required to the transfer line 27, which is associated with the main-washing zone 20, and/or to the transfer line 17, which is associated with the pre-washing zone 10, by means of the transfer pump 71.

According to one aspect of the present invention, it is provided that the excess final rinse liquid which is produced in the at least one final rinse zone 30, 40 is, in principle, guided past the main-washing zone 20 of the conveyor dishwasher 1 by means of the liquid transfer system. In principle, no liquid passes from the at least one final rinse zone 30, 40 into the main-washing tank 21 of the main-washing zone 20 or into the pre-washing tank 11 of the pre-washing zone 10 during operation of the conveyor dishwasher 1 by means of the bypass which is formed in said way, so that the liquid which is to be sprayed in the main-washing zone 20 or pre-washing zone 10 is, in principle, not regenerated during operation of the conveyor dishwasher 1.

The final rinse liquid or fresh water which is guided past the main-washing zone 20 in particular is supplied either to the pre-washing zone 10 or is used for manual pre-cleaning. Furthermore, it is also feasible, in principle, to supply the final rinse liquid which is guided past the main-washing zone 20 and past the pre-washing zone 10 directly to the waste water network or to a corresponding heat exchanger system and then to the waste water network.

The final rinse liquid/fresh water bypass is interrupted and at least a portion of the excess final rinse liquid which is produced in the at least one final rinse zone 30, 40 is supplied to the main-washing tank 21 of the main-washing zone 20 or to the pre-washing tank 11 of the pre-washing zone 10, specifically for the purpose of regenerating the washing liquid which is to be sprayed there, preferably automatically by the control device 2, and with greater preference selectively automatically, that is to say also in a manner which may be initiated manually, only in the case when it is detected by the sensor device 5 that the quality of the washing liquid which is recirculated in the main-washing zone 20 and/or which is recirculated in the pre-washing zone 10 falls below a previously defined or definable level.

This interruption in the final rinse liquid/fresh water bypass preferably lasts only until it is detected with the aid of the sensor device 5 that the quality of the washing liquid which is sprayed in the main-washing zone 20 in a recirculating manner or the quality of the washing liquid which is sprayed in the pre-washing zone 10 in a recirculating manner has again exceeded a previously defined or definable level.

In this aspect of the invention, provision is made, in particular, to maximize the partial quantity of the final rinse liquid or fresh water which is guided past the main-washing zone 20 of the conveyor dishwasher 1 per unit time. Fresh water or final rinse liquid should be guided out of the fresh water final rinse zone and/or pump final rinse zone 30 to the main-washing zone 20 only when there is a risk of the rinsing result being adversely affected.

According to the invention, this objective is achieved in that the "bypass", that is to say the proportion of the final rinse liquid which is guided past the main-washing zone 20 or the proportion of fresh water which is guided past the main-washing zone 20, is set to 100% as standard.

In other words, the conveyor dishwasher 1, in principle, guides the entire quantity of final rinse liquid which overflows in the at least one final rinse zone 30, 40 out of the at least one final rinse zone 30, 40 past the main-washing zone 20 into the pre-washing tank 11 which is associated with the pre-washing zone 10 or into the pre-cleaning tank 61 or into the waste water network as standard. As a result, the washing liquid in the main-washing tank 21 of the main-washing zone 20 is not diluted and therefore there is accordingly also no reduction in the concentration of detergent in the washing liquid which has collected in the main-washing tank 21.

Secondly, owing to the 100% bypass which is provided as standard, the washing liquid which has collected in the main-washing tank 21 is not regenerated either and therefore there is no reduction in the concentration of dirt and no removal of dirt by means of the cascade which is provided, as before, for the washing zones 10, 20.

It should be noted here that the dirt pollution and the ingress of dirt into the main-washing tank 21 are generally not constant variables. These parameters (dirt pollution and ingress) are dependent, in particular, on the use of the conveyor dishwasher 1 by the operator and on the degree of soiling of the washware and therefore vary from machine to machine and even from day to day or from dishwasher layer to dishwasher layer.

Based on this variability of the parameter "tank soiling", the degree of soiling of the washing liquid which has collected in the main-washing tank 21 of the main-washing zone 20 should be detected with the aid of the sensor device, and in particular with the aid of a conductivity/dirt/turbidity sensor 5.

However, as an alternative or in addition to this, it is also feasible for the degree of soiling of the final rinse liquid which is sprayed in the pump final rinse zone 30 in a recirculating manner to be detected with the aid of the sensor device, and in particular with the aid of a conductivity/dirt/turbidity sensor 5, so that it is possible to make a statement about the quality of the washing liquid which has collected in the main-washing tank 21 of the main-washing zone 20 indirectly in this way.

According to preferred developments of the solution according to the invention, the quantity of final rinse liquid which is guided past the main-washing zone 20 per unit time is regulated depending on the measured or derived degree of soiling of the washing liquid which has collected in the main-washing tank 21 of the main-washing zone 20.

If, for example, the soiling of the detergent which has collected in the main-washing tank 21 lies in a range in which no disadvantageous effects are expected on the overall rinsing result, the entire overflow quantity of final rinse liquid is further guided out of the at least one final rinse zone 30, 40 and, in particular, the pump final rinse zone 30 past the main-washing tank 21 of the main-washing zone 20 into the pre-washing tank 11 of the pre-washing zone 10 and/or to an, in particular manual, pre-clearing station and/or directly to a waste water network.

If the concentration of dirt in the washing liquid which has collected in the main-washing tank 21 of the main-washing zone 20 approaches a threshold value at which it is expected that the overall rinsing result will be disadvantageously influenced (for example due to re-contamination), the washing liquid which has collected in the main-washing tank 21 of the main-washing zone 20 is diluted/regenerated by at least a portion of the overflow final rinse liquid from the at least one final rinse zone 30, 40.

The quantity of final rinse liquid which is required only as necessary for regenerating the washing liquid which is to be sprayed in the main-washing zone 20 in a recirculating manner can preferably be adjusted to 100% continuously or in steps, it being possible to realize this, for example, by means of a corresponding actuating valve V1, V2, V4.

The washing liquid which is to be sprayed in the main-washing zone 20 is diluted/regenerated until a disadvantageous influence on the overall rinsing result is not expected again. Then, 100% of the overflow final rinse liquid which is produced in the at least one final rinse zone 30, 40 is again guided as standard out of the at least one final rinse zone 30, 40 and, in particular, out of the pump final rinse zone 30, past the main-washing tank 21 of the main-washing zone 20, directly into the pre-washing tank 11, the pre-cleaning tank 61 and/or into the waste water network.

The invention is not restricted to the embodiments of the conveyor dishwasher 1 illustrated by way of example in the drawings, but rather can be gathered from looking at all of the features disclosed therein together.

## Claims

1. A conveyor dishwasher (1) for washing washware, comprising:
- at least one final rinse zone (30, 40) comprising means (32, 42) for continuously or intermittently spraying a final rinse liquid comprising fresh water onto the washware which is to be treated, and comprising at least one tank (31) for collecting said final rinse liquid which has been sprayed in the at least one final rinse zone (30, 40);
- at least one washing zone (10, 20) which - as seen in the conveying direction (T) of the washware - is arranged upstream of the at least one final rinse zone (30, 40), and comprising means (22, 24) for spraying washing liquid onto the washware which is to be treated,
- a sensor device (5) for detecting at least one parameter which characterizes the quality of the washing liquid regarding the degree of soiling which is to be sprayed in the at least one washing zone (10, 20),
- a liquid transfer system which is designed, for the purpose of regenerating the washing liquid which is to be sprayed in the at least one washing zone (10, 20), to supply a, in particular definable, quantity of final rinse liquid from the at least one tank (31) to the at least one washing zone (10, 20),
wherein the liquid transfer system has a liquid bypass system (17) which is designed to route at least a portion, in particular a definable portion, of the final rinse liquid collected in the at least one tank (31) past the at least one washing zone (10, 20) to a treatment zone, preferably a pre-washing zone (10) or a pre-cleaning station, in particular a manual pre-cleaning station, which is arranged upstream of the at least one washing zone (10, 20) as seen in the conveying direction (T) of the washware;
wherein the liquid transfer system is designed to supply a, in particular definable, quantity of said final rinse liquid collected in the at least one tank (31) directly to the at least one washing zone (10, 20) depending on the at least one parameter which characterizes the quality of the washing liquid regarding its degree of soiling which is to be sprayed in the at least one washing zone (10, 20), which at least one parameter is detected by the sensor device (5), in order to regenerate the washing liquid which is to be sprayed in the at least one washing zone (10, 20); and
wherein a control device (2) is provided, said control device being configured to drive the liquid transfer system during operation of the conveyor dishwasher (1) such that, in principle, the excess quantity of final rinse liquid which is produced in the at least one final rinse zone (30, 40) is routed past the at least one washing zone (10, 20) by means of a 100% final rinse liquid bypass, so that this excess quantity of final rinse liquid which is produced in the at least one final rinse zone (30, 40) is selectively supplied to the treatment zone which is arranged upstream of the at least one washing zone (10, 20) as seen in the conveying direction (T) of the washware,
wherein the control device (2) is further configured to reduce the proportion of the quantity of final rinse liquid which is routed past the at least one washing zone (10, 20) only when the control device (2) detects that the degree of soiling of the washing liquid which is sprayed in the at least one washing zone (10, 20) in a recirculating manner exceeds a previously defined or definable level.

2. The conveyor dishwasher (1) as claimed in claim 1,
wherein the at least one final rinse zone (30, 40) has a fresh water final rinse zone (40) in which fresh water containing rinse aid added in a metered manner which has not previously been sprayed in one of the treatment zones of the conveyor dishwasher (1) is sprayed onto the washware which is to be treated.

3. The conveyor dishwasher (1) as claimed in claim 2,
wherein the at least one final rinse zone (30, 40) further has at least one pump final rinse zone (30) in which at least a portion of the liquid which is collected in the tank (31) which is associated with the fresh water final rinse zone (40) is sprayed, preferably in a recirculating manner, onto the washware which is to be treated, wherein a tank (31) is preferably associated with the at least one pump final rinse zone (30, 40), at least a portion of the liquid which is sprayed in the pump final rinse zone (30, 40) being collected in said tank.

4. The conveyor dishwasher (1) as claimed in claim 2 or 3,
wherein the liquid transfer system is designed to supply liquid to the at least one washing zone (10, 20) preferably directly from the tank (31) of the pump final rinse zone (30, 40) and/or preferably directly from the tank (31) of the fresh water final rinse zone (30, 40); and/or
wherein the liquid transfer system is designed to at least temporarily route at least a portion of the liquid which is collected in the tank (31) of the pump final rinse zone (30) and/or at least a portion of the liquid which is collected in the tank (31) of the fresh water final rinse zone (40) past the at least one washing zone (10, 20) and supply it preferably to a pre-washing zone (10) and/or to a pre-cleaning station of the conveyor dishwasher (1).

5. The conveyor dishwasher (1) as claimed in one of claims 1 to 4,
wherein a device for metering detergent into the liquid which is to be sprayed in the at least one washing zone (10, 20) is further provided, wherein the device is designed to meter detergent into the liquid which is to be sprayed in the at least one washing zone (10, 20) depending on the quantity of liquid which was previously sprayed in the at least one final rinse zone (30, 40) and is supplied to the at least one washing zone (10, 20) by means of the liquid transfer system, and/or depending on a quantity of fresh water which is supplied to the at least one washing zone (10, 20) and has not previously been sprayed in the at least one final rinse zone (30, 40), and/or depending on the quality, in particular the conductivity, of the washing liquid which is sprayed in the at least one washing zone (10, 20) in a recirculating manner.

6. The conveyor dishwasher (1) as claimed in one of claims 1 to 5,
wherein a sensor device (5) is further provided for detecting at least one parameter which characterizes the quality of the liquid which is sprayed in the at least one final rinse zone (30, 40).

7. The conveyor dishwasher (1) as claimed in one of claims 1 to 6,
wherein the liquid transfer system is designed to supply fresh water which has not previously been sprayed in the at least one final rinse zone (30, 40) to the at least one washing zone (10, 20) depending on at least one detected parameter.

8. The conveyor dishwasher (1) as claimed in claim 1,
wherein the sensor device (5) has at least one turbidity sensor and/or at least one optical, inductive, capacitive and/or electromagnetic sensor.

9. The conveyor dishwasher (1) as claimed in one of claims 1 to 8,
wherein a device for metering detergent into the washing liquid which is to be sprayed in the at least one washing zone (10, 20) is provided, wherein the device is designed to meter detergent into the washing liquid and in particular to set the quantity of detergent which is to be added to the washing liquid in a metered manner per unit time depending on the at least one detected parameter and in particular depending on a detected electrical conductivity of the washing liquid.

10. The conveyor dishwasher (1) as claimed in one of claims 1 to 9,
wherein the liquid transfer system has at least one control valve device (V1, V2, V3, V4) which can be driven.

11. A method for operating a conveyor dishwasher (1) as claimed in one of claims 1 to 10, wherein the method comprises the following method steps:
- final rinse liquid is continuously or intermittently sprayed in at least one final rinse zone (30, 40) of the conveyor dishwasher (1);
- the final rinse liquid which is continuously or intermittently sprayed in the at least one final rinse zone (30, 40) is collected in at least one tank (31); and
- in principle 100% of the final rinse liquid which is collected in the at least one tank (31) is routed past at least one washing zone (10, 20) of the conveyor dishwasher (1) and supplied to a washware treatment zone which is arranged upstream of the at least one washing zone (10, 20) as seen in the conveying direction (T) of the washware, wherein the proportion of the quantity of final rinse liquid which is routed past the at least one washing zone (10, 20) is reduced only when the degree of soiling of the washing liquid which is sprayed in the at least one washing zone (10, 20) exceeds a previously defined or definable level.

## Patentansprüche

1. Durchlaufspülmaschine (1) zum Spülen von Spülgut, aufweisend:
- zumindest eine Nachspülzone (30, 40), die Mittel (32, 42) zum kontinuierlichen oder intermittierenden Sprühen einer Frischwasser aufweisenden Nachspülflüssigkeit auf das zu behandelnde Spülgut aufweist, und die zumindest einen Tank (31) zum Sammeln der Nachspülflüssigkeit, die in der zumindest einen Nachspülzone (30, 40) gesprüht wurde, aufweist;
- zumindest eine Spülzone (10, 20), die - bei Betrachtung in der Durchlaufrichtung (T) des Spülguts - stromaufwärts von der zumindest einen Nachspülzone (30, 40) angeordnet ist, und die Mittel (22, 24) zum Sprühen von Spülflüssigkeit auf das zu behandelnde Spülgut aufweist,
- eine Sensorvorrichtung (5) zum Erfassen zumindest eines Parameters, der die Qualität der Spülflüssigkeit, die in der zumindest einen Spülzone (10, 20) versprüht werden soll, in Bezug auf den Verschmutzungsgrad charakterisiert,
- ein Flüssigkeitstransfersystem, das, zum Zweck der Aufbereitung der in der zumindest einen Spülzone (10, 20) zu versprühenden Spülflüssigkeit, zum Zuführen einer, insbesondere definierbaren, Menge von Nachspülflüssigkeit aus dem zumindest einen Tank (31) zu der zumindest einen Spülzone (10, 20) ausgelegt ist,
wobei das Flüssigkeitstransfersystem ein Flüssigkeitsbypasssystem (17) aufweist, das dafür ausgelegt ist, zumindest einen Teil, insbesondere einen definierbaren Teil, der Nachspülflüssigkeit, die in dem zumindest einen Tank (31) gesammelt wird, an der zumindest einen Spülzone (10, 20) vorbei in eine Behandlungszone, vorzugsweise eine Vorspülzone (10) oder eine Vorreinigungsstation, insbesondere eine manuelle Vorreinigungsstation, zu leiten, die, bei Betrachtung in der Durchlaufrichtung (T) des Spülguts, stromaufwärts von der zumindest einen Spülzone (10, 20) angeordnet ist;
wobei das Flüssigkeitstransfersystem dafür ausgelegt ist, eine, insbesondere definierbare, Menge der Nachspülflüssigkeit, die in dem zumindest einen Tank (31) gesammelt wird, in Abhängigkeit von dem zumindest einen Parameter, der die Qualität der Spülflüssigkeit, die in der mindestens einen Spülzone (10, 20) versprüht werden soll, in Bezug auf ihren Verschmutzungsgrad charakterisiert, wobei der zumindest eine Parameter von der Sensorvorrichtung (5) erfasst wird, direkt zu der zumindest einen Spülzone (10, 20) zuzuführen, um die Spülflüssigkeit, die in der zumindest einen Spülzone (10, 20) versprüht werden soll, aufzubereiten; und
wobei eine Steuervorrichtung (2) bereitgestellt ist, wobei die Steuervorrichtung so konfiguriert ist, dass sie das Flüssigkeitstransfersystem während des Betriebs der Durchlaufspülmaschine (1) so ansteuert, dass, im Prinzip, die überschüssige Menge von Nachspülflüssigkeit, die in der zumindest einen Nachspülzone (30, 40) erzeugt wird, mittels eines 100%igen Nachspülflüssigkeitsbypasses an der zumindest einen Spülzone (10, 20) vorbeigeleitet wird, sodass diese überschüssige Menge von Nachspülflüssigkeit, die in der zumindest einen Nachspülzone (30, 40) erzeugt wird, selektiv der Behandlungszone zugeführt wird, die, bei Betrachtung in der Durchlaufrichtung (T) des Spülguts, stromaufwärts von der zumindest einen Spülzone (10, 20) angeordnet ist,
wobei die Steuervorrichtung (2) ferner konfiguriert ist, den Anteil der Menge von Nachspülflüssigkeit, die an der zumindest einen Spülzone (10, 20) vorbeigeleitet wird, nur dann zu reduzieren, wenn die Steuervorrichtung (2) erkennt, dass der Verschmutzungsgrad der Spülflüssigkeit, die in der zumindest einen Spülzone (10, 20) in umlaufender Weise versprüht wird, einen zuvor definierten oder definierbaren Wert übersteigt.

2. Durchlaufspülmaschine (1) nach Anspruch 1,
wobei die zumindest eine Nachspülzone (30, 40) eine Frischwasser-Nachspülzone (40) aufweist, in der Frischwasser, das in einer dosierten Weise zugegebenes Geschirrspülmittel enthält, das nicht zuvor in einer der Behandlungszonen der Durchlaufspülmaschine (1) versprüht wurde, auf das zu behandelnde Spülgut gesprüht wird.

3. Durchlaufspülmaschine (1) nach Anspruch 2,
wobei die zumindest eine Nachspülzone (30, 40) ferner zumindest eine Pumpennachspülzone (30) aufweist, in der zumindest ein Teil der Flüssigkeit, die in dem Tank (31) gesammelt wird, der mit der Frischwasser-Nachspülzone (40) verbunden ist, vorzugsweise in umlaufender Weise, auf das zu behandelnde Spülgut gesprüht wird, wobei ein Tank (31) vorzugsweise mit der zumindest einen Pumpennachspülzone (30, 40) verbunden ist, wobei zumindest ein Teil der Flüssigkeit, die in der Pumpennachspülzone (30, 40) versprüht wird, in dem Tank gesammelt wird.

4. Durchlaufspülmaschine (1) nach Anspruch 2 oder 3,
wobei das Flüssigkeitstransfersystem dafür ausgelegt ist, Flüssigkeit zu der zumindest einen Spülzone (10, 20) zuzuführen, vorzugsweise direkt aus dem Tank (31) der Pumpennachspülzone (30, 40) und/oder vorzugsweise direkt aus dem Tank (31) der Frischwasser-Nachspülzone (30, 40);
und/oder
wobei das Flüssigkeitstransfersystem dafür ausgelegt ist, zumindest einen Teil der Flüssigkeit, die in dem Tank (31) der Pumpennachspülzone (30) gesammelt wird, und/oder zumindest einen Teil der Flüssigkeit, die in dem Tank (31) der Frischwasser-Nachspülzone (40) gesammelt wird, an der zumindest einen Spülzone (10, 20) vorbeizuleiten und ihn vorzugsweise einer Vorspülzone (10) und/oder einer Vorreinigungsstation der Durchlaufspülmaschine (1) zuzuführen.

5. Durchlaufspülmaschine (1) nach einem der Ansprüche 1 bis 4, wobei ferner eine Vorrichtung zum Dosieren von Spülmittel in die Flüssigkeit, die in der zumindest einen Spülzone (10, 20) versprüht werden soll, bereitgestellt ist,
wobei die Vorrichtung zum Dosieren von Spülmittel in die Flüssigkeit, die in der zumindest einen Spülzone (10, 20) versprüht werden soll, in Abhängigkeit von der Menge von Flüssigkeit, die zuvor in der zumindest einen Nachspülzone (30, 40) versprüht wurde und der zumindest einen Spülzone (10, 20) mittels des Flüssigkeitstransfersystems zugeführt wird, und/oder in Abhängigkeit von einer Menge von Frischwasser, das der zumindest einen Spülzone (10, 20) zugeführt wird und nicht zuvor in der zumindest einen Nachspülzone (30, 40) versprüht wurde, und/oder in Abhängigkeit von der Qualität, insbesondere die Leitfähigkeit, der Spülflüssigkeit, die in der zumindest einen Spülzone (10, 20) in umlaufender Weise versprüht wird, ausgelegt ist.

6. Durchlaufspülmaschine (1) nach einem der Ansprüche 1 bis 5, wobei ferner eine Sensorvorrichtung (5) zum Erfassen zumindest eines Parameters bereitgestellt ist, der die Qualität der Flüssigkeit charakterisiert, die in der zumindest einen Nachspülzone (30, 40) versprüht wird.

7. Durchlaufspülmaschine (1) nach einem der Ansprüche 1 bis 6, wobei das Flüssigkeitstransfersystem zum Zuführen von Frischwasser, das nicht zuvor in der zumindest einen Nachspülzone (30, 40) versprüht wurde, zu der zumindest einen Spülzone (10, 20) in Abhängigkeit von zumindest einem erfassten Parameter ausgelegt ist.

8. Durchlaufspülmaschine (1) nach Anspruch 1,
wobei die Sensorvorrichtung (5) zumindest einen Trübungssensor und/oder zumindest einen optischen, induktiven, kapazitiven und/oder elektromagnetischen Sensor aufweist.

9. Durchlaufspülmaschine (1) nach einem der Ansprüche 1 bis 8, wobei eine Vorrichtung zum Dosieren von Spülmittel in die Spülflüssigkeit, die in der zumindest einen Spülzone (10, 20) versprüht werden soll, bereitgestellt ist, wobei die Vorrichtung zum Dosieren von Spülmittel in die Spülflüssigkeit und insbesondere zum Einstellen der Menge von Spülmittel, das der Spülflüssigkeit in dosierter Weise pro Zeiteinheit zugesetzt werden soll, in Abhängigkeit von dem zumindest einen erfassten Parameter und insbesondere in Abhängigkeit von einer erfassten elektrischen Leitfähigkeit der Spülflüssigkeit ausgelegt ist.

10. Durchlaufspülmaschine (1) nach einem der Ansprüche 1 bis 9, wobei das Flüssigkeitstransfersystem zumindest eine Steuerventilvorrichtung (V1, V2, V3, V4) aufweist, die angesteuert werden kann.

11. Verfahren zum Betreiben einer Durchlaufspülmaschine (1) nach einem der Ansprüche 1 bis 10, wobei das Verfahren die folgenden Verfahrensschritte aufweist:
- kontinuierliches oder intermittierendes Versprühen von Nachspülflüssigkeit in zumindest einer Nachspülzone (30, 40) der Durchlaufspülmaschine (1);
- Sammeln der Nachspülflüssigkeit, die in der zumindest einen Nachspülzone (30, 40) kontinuierlich oder intermittierend versprüht wird, in zumindest einem Tank (31); und
- Vorbeiführen von grundsätzlich 100 % der in dem zumindest einen Tank (31) gesammelten Nachspülflüssigkeit an zumindest einer Spülzone (10, 20) der Durchlaufspülmaschine (1) und Zuführen dieser zu einer Spülgutbehandlungszone, die, bei Betrachtung in der Durchlaufrichtung (T) des Spülguts, stromaufwärts der zumindest einen Spülzone (10, 20) angeordnet ist,
wobei der Anteil der Menge von Nachspülflüssigkeit, die an der zumindest einen Spülzone (10, 20) vorbeigeleitet wird, nur dann reduziert wird, wenn der Verschmutzungsgrad der Spülflüssigkeit, die in der zumindest einen Spülzone (10, 20) versprüht wird, einen zuvor definierten oder definierbaren Wert übersteigt.

## Revendications

1. Lave-vaisselle à convoyeur (1) pour le lavage de la vaisselle, comprenant :
- au moins une zone de rinçage final (30, 40) comprenant des moyens (32, 42) pour la pulvérisation de manière continue ou intermittente d'un liquide de rinçage final comprenant de l'eau douce sur la vaisselle qui doit être traitée, et comprenant au moins un réservoir (31) pour la collecte dudit liquide de rinçage final qui a été pulvérisé dans l'au moins une zone de rinçage final (30, 40) ;
- au moins une zone de lavage (10, 20) qui - comme vu dans la direction de convoyage (T) de la vaisselle - est agencée en amont de l'au moins une zone de rinçage final (30, 40), et comprenant des moyens (22, 24) pour la pulvérisation du liquide de lavage sur la vaisselle qui doit être traitée,
- un dispositif de capteur (5) pour la détection d'au moins un paramètre qui caractérise la qualité du liquide de lavage concernant le degré de salissure qui doit être pulvérisé dans l'au moins une zone de lavage (10, 20),
- un système de transfert de liquide qui est conçu pour l'objectif de régénération du liquide de lavage à pulvériser dans l'au moins une zone de lavage (10, 20) afin de fournir une quantité, en particulier définissable, de liquide de rinçage final provenant de l'au moins un réservoir (31) vers l'au moins une zone de lavage (10, 20),
dans lequel le système de transfert de liquide a un système de dérivation de liquide (17) qui est conçu pour acheminer au moins une partie, en particulier une partie définissable, du liquide de rinçage final collecté dans l'au moins un réservoir (31) au-delà de l'au moins une zone de lavage (10, 20) vers une zone de traitement, de préférence une zone de prélavage (10) ou un poste de prénettoyage, en particulier un poste de prénettoyage manuel, qui est agencé en amont de l'au moins une zone de lavage (10, 20) comme vu dans la direction de convoyage (T) de la vaisselle ;
dans lequel le système de transfert de liquide est conçu pour fournir une quantité, en particulier définissable, dudit liquide de rinçage final collecté dans l'au moins un réservoir (31) directement vers ladite au moins une zone de lavage (10, 20) en fonction de l'au moins un paramètre caractérisant la qualité du liquide de lavage en ce qui concerne son degré de salissure à pulvériser dans l'au moins une zone de lavage (10, 20), lequel au moins un paramètre est détecté par le dispositif de capteur (5), de manière à régénérer le liquide de lavage qui doit être pulvérisé dans l'au moins une zone de lavage (10, 20) ; et
dans lequel un dispositif de commande (2) est fourni, ledit dispositif de commande étant configuré pour entraîner le système de transfert de liquide durant le fonctionnement du lave-vaisselle à convoyeur (1) de sorte que, en principe, la quantité excédentaire de liquide de rinçage final qui est produite dans l'au moins une zone de rinçage final (30, 40) est acheminée au-delà de l'au moins une zone de lavage (10, 20) au moyen d'une dérivation de liquide de rinçage final à 100 %, de sorte que cette quantité en excès de liquide de rinçage final qui est produite dans l'au moins une zone de rinçage final (30, 40) est fournie sélectivement vers la zone de traitement qui est agencée en amont de l'au moins une zone de lavage (10, 20) comme vu dans la direction de convoyage (T) de la vaisselle,
dans lequel le dispositif de commande (2) est en outre configuré pour réduire la proportion de la quantité de liquide de rinçage final qui est acheminée au-delà l'au moins une zone de lavage (10, 20) uniquement lorsque le dispositif de commande (2) détecte que le degré de salissure du liquide de lavage qui est pulvérisé dans l'au moins une zone de lavage (10, 20) en recirculation dépasse un niveau précédemment défini ou pouvant être défini.

2. Lave-vaisselle à convoyeur (1) selon la revendication 1, dans lequel l'au moins une zone de rinçage final (30, 40) a une zone de rinçage final d'eau douce (40) dans laquelle de l'eau douce contenant un auxiliaire de rinçage ajouté d'une manière dosée qui n'a pas été préalablement pulvérisée dans l'une des zones de traitement du lave-vaisselle à convoyeur (1) est pulvérisée sur la vaisselle qui doit être traitée.

3. Lave-vaisselle à convoyeur (1) selon la revendication 2, dans lequel l'au moins une zone de rinçage final (30, 40) présente en outre au moins une zone de rinçage final de pompe (30) dans laquelle au moins une partie du liquide qui est collecté dans le réservoir (31) qui est associé à la zone de rinçage final d'eau douce (40) est pulvérisée, de préférence en recirculation, sur la vaisselle qui doit être traitée, dans lequel un réservoir (31) est de préférence associé à l'au moins une zone de rinçage final de pompe (30, 40), au moins une partie du liquide qui est pulvérisé dans la zone de rinçage final de pompe (30, 40) étant collectée dans ledit réservoir.

4. Lave-vaisselle à convoyeur (1) selon la revendication 2 ou 3,
dans lequel le système de transfert de liquide est conçu pour fournir du liquide à l'au moins une zone de lavage (10, 20) de préférence directement depuis le réservoir (31) de la zone de rinçage final de pompe (30, 40) et/ou de préférence directement depuis le réservoir (31) de la zone de rinçage final d'eau douce (30, 40) ; et/ou
dans lequel le système de transfert de liquide est conçu pour acheminer au moins temporairement au moins une partie du liquide qui est collecté dans le réservoir (31) de la zone de rinçage final de pompe (30) et/ou au moins une partie du liquide qui est collecté dans le réservoir (31) de la zone de rinçage final d'eau douce (40) au-delà de l'au moins une zone de lavage (10, 20) et le fournir de préférence à une zone de pré-lavage (10) et/ou à un poste de pré-nettoyage du convoyeur de lave-vaisselle (1).

5. Lave-vaisselle à convoyeur (1) selon l'une des revendications 1 à 4,
dans lequel un dispositif pour la mesure du détergent dans le liquide qui doit être pulvérisé dans l'au moins une zone de lavage (10, 20) est en outre fourni,
dans lequel le dispositif est conçu pour doser le détergent dans le liquide qui doit être pulvérisé dans l'au moins une zone de lavage (10, 20) en fonction de la quantité de liquide qui a été préalablement pulvérisé dans l'au moins une zone de rinçage final (30, 40) et est fourni à l'au moins une zone de lavage (10, 20) au moyen du système de transfert de liquide, et/ou en fonction d'une quantité d'eau douce qui est fournie à l'au moins une zone de lavage (10, 20) et n'a pas été préalablement pulvérisée dans l'au moins une zone de rinçage final (30, 40), et/ou en fonction de la qualité, en particulier la conductivité, du liquide de lavage qui est pulvérisé dans l'au moins une zone de lavage (10, 20) en recirculation.

6. Lave-vaisselle à convoyeur (1) selon l'une des revendications 1 à 5,
dans lequel un dispositif de capteur (5) est en outre fourni pour la détection d'au moins un paramètre qui caractérise la qualité du liquide qui est pulvérisé dans l'au moins une zone de rinçage final (30, 40).

7. Lave-vaisselle à convoyeur (1) selon l'une des revendications 1 à 6,
dans lequel le système de transfert de liquide est conçu pour fournir de l'eau douce qui n'a pas été préalablement pulvérisée dans l'au moins une zone de rinçage final (30, 40) vers l'au moins une zone de lavage (10, 20) en fonction d'au moins un paramètre détecté.

8. Lave-vaisselle à convoyeur (1) selon la revendication 1, dans lequel le dispositif de capteur (5) a au moins un capteur de turbidité et/ou au moins un capteur optique, inductif, capacitif et/ou électromagnétique.

9. Lave-vaisselle à convoyeur (1) selon l'une des revendications 1 à 8,
dans lequel un dispositif pour le dosage du détergent dans le liquide de lavage qui doit être pulvérisé dans l'au moins une zone de lavage (10, 20) est fourni, dans lequel le dispositif est conçu pour doser le détergent dans le liquide de lavage et en particulier pour régler la quantité de détergent qui doit être ajoutée au liquide de lavage d'une manière dosée par unité de temps en fonction de l'au moins un paramètre détecté et en particulier en fonction d'une conductivité électrique détectée du liquide de lavage.

10. Lave-vaisselle à convoyeur (1) selon l'une des revendications 1 à 9,
dans lequel le système de transfert de liquide a au moins un dispositif de vanne de commande (V1, V2, V3, V4) qui peut être entraîné.

11. Procédé pour l'utilisation d'un lave-vaisselle à convoyeur (1) selon l'une quelconque des revendications 1 à 10, dans lequel le procédé comprend les étapes de procédé suivantes :
- le liquide de rinçage final est pulvérisé en continu ou par intermittence dans au moins une zone de rinçage final (30, 40) du lave-vaisselle à convoyeur (1) ;
- le liquide de rinçage final qui est pulvérisé en continu ou par intermittence dans l'au moins une zone de rinçage final (30, 40) est collecté dans au moins un réservoir (31) ; et
- en principe, 100 % du liquide de rinçage final qui est collecté dans l'au moins un réservoir (31) est acheminé au-delà d'au moins une zone de lavage (10, 20) du lave-vaisselle à convoyeur (1) et est fourni vers une zone de traitement de la vaisselle qui est agencée en amont de l'au moins une zone de lavage (10, 20) comme vu dans le sens de convoyage (T) de la vaisselle,
dans lequel la proportion de la quantité de liquide de rinçage final qui est acheminée au-delà de l'au moins une zone de lavage (10, 20) est réduite uniquement lorsque le degré de salissure du liquide de lavage qui est pulvérisé dans l'au moins une zone de lavage (10, 20) dépasse un niveau défini précédemment ou pouvant être défini.
